# EUROPEAN PATENT APPLICATION

(11) **EP 3 834 623 A1**
(43) Date of publication of application: **16.06.2021**
(21) Application number: 18929309.5
(22) Date of filing: 10.08.2018
(51) Int. Cl.: A23L 2/60, A23L 2/58, A23L 33/20, A23L 33/125, A23L 33/15

(54) **NUTRITIONAL DRINK**

(71) Applicant: Samyang Corporation, Seoul 03129 (KR)
(72) Inventor: HAN, Tae-Chul, Hwaseong-si, Gyeonggi-do 18496 (KR); LIM, Hye Jin, Seongnam-si Gyeonggi-do 13503 (KR); KIM, Bong Chan, Seoul 01709 (KR); KIM, Yong-In, Yongin-si Gyeonggi-do 16868 (KR); SEO, Il, Gwangju-si, Gyeonggi-do 12784 (KR); LEE, Seung Mi, Hwaseong-si, Gyeonggi-do 18477 (KR)
(74) Representative: Schön, Christoph
(86) International application number: PCT/KR2018/009201
(87) International publication number: WO 2020/032302

(57) **Abstract**

The present invention relates to a nutritional drink containing allulose and vitamins, and has excellent storage stability and sensory properties depending on the use of allulose.

## Description

### [Technical field]

The present invention is a nutritional drink containing allulose and a manufacturing method, and can provide a low-calorie or calorie-free nutritional drink having, and in particular, sensory superior nutritional drinks with stable maintenance of color of vitamins.

### [Related Art]

Drinks on the market contain a large amount of saccharides such as monosaccharides or disaccharides. When it is consumed in excess, there is a problem that can cause adult diseases such as dental caries, obesity and diabetes. For the health of people, the government is also encouraging the implementation of "saccharides reduction" in food and beverage compositions. According to the instrumental analysis method of the Food Sanitation Act, 'saccharides' means all of monosaccharides and disaccharides present in food, where the monosaccharides are fructose, glucose, and the monosaccharides are sugar, maltose, and lactose. In order to achieve the saccharide reduction in food and beverage, it is inevitable to substitute sugar. Drinks on the market contain a large amount of sugar, so when consumed in excess, there is a problem that can cause adult diseases such as dental caries, obesity and diabetes. For the health of the people, the government is also encouraging the implementation of "sugar reduction" in food and beverage compositions. According to the instrumental analysis method of the Food Sanitation Act, 'saccharides' means the sum of monosaccharides and disaccharides present in food, and there are fructose and glucose as monosaccharides and sugar, maltose and lactose as disaccharides. In order to achieve the above-described sugar reduction in food and beverage, it is particularly inevitable to substitute sugar.

Sugar is one of the representative sweeteners that includes sucrose as its main component and is added to food to impart a sweet taste. Due to the excellent sweetness of sugar, it has been added to various foods and processed foods since the past, and has been regarded as the most preferred sweetener that enhances the taste of food and appetite. However, recently, the problems have been raised as the harmfulness of sugar continues to be revealed. Specifically, excessive intake of sugar is pointed out as a major cause of various lifestyle diseases such as obesity and diabetes, as well as tooth decay, and the need to develop substitute sweeteners is emerging worldwide. Recently, various sweetening materials have been developed, but in consideration of sweetness degree and sweetness quality, the various functional materials, sweeting material and dietary fiber are formulated and commercialized by mixing sugar.

Allulose, which is used as a sweetener to replace sugar, is a C3 epimer of fructose, has a sweetness degree equivalent to 70% of fructose, and is a functional sugar that regulates blood glucose, prevents tooth decay, and inhibits fat synthesis in the liver. Sugar alcohols, which are widely used as sugar substitute sweeteners, have side effects such as causing diarrhea, when consumed over a certain amount. However, allulose has no known side effects. Therefore, there is a growing interest in allulose as a sweetener.

### [Disclosure]

### [Technical Problem]

An object of the present invention is to provide a low-calorie or calorie-free nutritional drink containing allulose and a method for producing the same.

Another object of the present invention is to provide a nutritional drink and a method for producing the same, in which the color of vitamin is stably maintained and excellent sensory properties.

### [Technical Solution]

The present invention relates to a nutritional drink containing allulose and a method for manufacturing the same, and provides a composition and its preparation method which can stably maintain the vitamin color and excellent sensory properties by using allulose.

Hereinafter, the present invention will be described in more detail.

An embodiment of the present invention provides a nutritional drink containing allulose. For example, the nutritional drink of the present invention includes allulose, vitamins and rutin.

The term "nutritional drink" of the present invention refers to a drink or a beverage containing nutritional components, components of fatigue recovery, or electrolytes for nutrient supplement, fatigue recovery, or water supplement in physical fatigue. For examples, it may include energy beverages (or energy drinks), vitamin beverages (vitamin drinks, drinking vitamins, or vitamin waters), nourishing tonic beverages or drinks which are commercially available on the market,

The nutritional drink of the present invention can provide a low-calorie or calorie-free nutritional drink by using allulose as a sweetener, thereby reducing excessive intake of monosaccharides or disaccharides such as glucose, fructose or sugar, and preventing adult diseases such as diabetes and obesity. It has advantageously a high sweetness similar to that of sugar. In addition, it is possible to stably maintain the color of vitamins (e.g., vitamin B), which is a main component in nutritional drink, for a long time, and providing a nutritional drink with excellent sensory properties by improving vitamin odor or aftertaste of high-intensity sweeteners.

The nutritional drink of the present invention contains allulose as a saccharide, and has a calorie value of 20 kcal / 100 mL or less, for example, 0.1 to 20 kcal / 100 mL, preferably 0.1 to 10 kcal / 100 mL, or more preferably 4 to 10 kcal / 100 mL or 0.1 to 4 kcal / 100 mL or may be calorie free.

The vitamins may include at least one selected from the group consisting of vitamin A, vitamin B1, vitamin B2, vitamin B3, vitamin B5, vitamin B6, vitamin B7, vitamin B9, vitamin B12, vitamin C, and vitamin E. For example, the vitamin may be added in an amount of 0.0001 to 0.5% by weight, or more preferably 0.0001 to 0.1% by weight, based on 100% by weight of the total nutritional drink, as the solid content of vitamin alone or a mixture of two or more vitamins..

Conventional nutritional drinks containing vitamins have a problem of their color changes due to causes such as oxidation caused by exposure to air or ultraviolet rays. When vitamin is oxidized, the color change occurs. The vitamin oxidation can be confirmed by observing the color change of the vitamin. It can be seen that the nutritional drink of the present invention maintains the color stably even over time, and has excellent stability of vitamins, by including allulose, vitamins and rutin. For example, the nutritional drink has a color difference value (ΔE^{∗}ab) of 1 to 36, preferably 15 to 36, or more preferably 20 to 35.5, which is measured after storing 24 hours at a temperature of 45°C and 4,000 lux with a light-induced food deterioration tester (e.g., Lux Meter manufactured by Gwangjin Chemical co. ltd.).

Rutin included in the nutritional drink of the present invention may preferably be an enzymatically-modified rutin. The rutin is an extract obtained by extracting beans, flowers and buds of Sophora japonica L. belonging to Leguminosae, with water or ethanol, an extract of buckwheat whole plant obtained by extracting whole plants of knotgrass and buckwheat (Fagopyrum esculentum MOENCH.) with water or ethanol, or an extract of red bean whole plant obtained by extracting red bean (Phaseolus angularis CW. WIGHT.) with water or ethanol, and a main component of the extracts may be a flavonoid-based rutin (C₂₇H₃₀O₁₆ = 610.51). In addition, the enzymatically-modified rutin is obtained by treating rutin with a partial hydrolase to perform the elimination reaction of rhamnose or by reacting with a glycosyltransferase to perform the addition reaction of glucose to rutin, where the component may be α-glycorutin. In the present invention, rutin may be contained in a solid content of 0.0001 to 0.5% by weight, or more preferably 0.0001 to 0.1% by weight, based on 100% by weight of the total nutritional drink.

The nutritional drink according to the present invention including a mixture of allulose and rutin, can significantly improve the stability of vitamin due to the synergistic action by a combination of allulose and rutin. Specifically, the decrease in color difference value for the nutritional drink including a mixture of rutin and allulose was significantly higher than that for the nutritional drink including rutin alone. Thus, it found that the synergistic effect of the combination of allulose and rutin contributed to the improvement of the stability of vitamin.

The allulose may be prepared by chemical synthesis or a biological method using an allulose epimerase, and preferably, may be prepared by a biological method, for example, a microbial or enzymatic reaction. For example, the allulose is provided with a mixed saccharides or is obtained therefrom, and the mixed saccharides are prepared by reacting a fructose-containing raw material, with a composition for producing allulose including at least one selected from the group consisting of an allulose epimerase, microbial cells of a microorganism producing the enzyme, a culture of the microorganism, a lysate of the microorganism, and an extract of the culture or the lysate, or is obtained from the mixed saccharides.

Allulose contained in the nutritional drink of the present invention may be in the form of syrup or powder. The nutritional drink of the present invention contains the allulose in an amount of 0.1 to 20% by weight, preferably 0.5 to 15% by weight, or more preferably 1 to 10% by weight, based on 100% by percent of the total solids content of the nutritional drink.

The allulose syrup may be a solution prepared using allulose in various concentrations. The allulose syrup may be a solution prepared by using allulose in various concentrations. For example, the solid content of allulose in the allulose syrup may be in an amount of 10 to 100% by weight, preferably 70 to 99.99% by weight, or more preferably 90 to 99.99% by weight, based on 100% by weight of the allulose syrup. When allulose powder is used, the solid content of the allulose powder includes allulose having a purity of 90% or more, for example, 90 to 99.99% by weight, or more preferably 95 to 99.99% by weight based on the total content of allulose powder.

The allulose syrup may be obtained through separation, purification, and concentration processes from the allulose alone or from a mixed saccharides. In one embodiment of the present invention, the allulose syrup prepared through the separation and purification process may be liquid allulose syrup having an electrical conductivity of 1 to 50 µS/cm and sweet taste, and being colorless or pale yellow.

As an example for the production of allulose in the present invention, a method of preparing allulose including an expression system capable of producing an allulose epimerase with a high expression rate and stability, a generally recognized as safe (GRAS) microorganism using the expression system, and microorganisms and enzymes using the expression system, and the like are described in detail in Korean Patent Nos. 10-1318422 and 10-1656063.

The allulose may be allulose alone or a mixed saccharides containing additional other saccharides, and the examples of the mixed saccharides may contain 1 to 99.9% by weight of allulose based on 100% by weight of the solid content of the total mixed saccharides, and additionally include one or more selected from the group consisting of glucose and/or fructose. When the allulose-mixed saccharides contain fructose and/or glucose, the mixed saccharides may contain 1 to 90% by weight of fructose and/or 1 to 50% by weight of glucose. Specific example of the mixed saccharides containing allulose includes 5 to 30 parts by weight of allulose, 20 to 50 parts by weight of fructose and 20 to 55 parts by weight of glucose, and 1 to 10 parts by weight of oligosaccharide based on 100 parts by weight of the total solid content of the mixed saccharides. It may contain, or may not contain oligosaccharides. The allulose, fructose and glucose are preferably all D-isomers.

In addition, the nutritional drink may further include one or more saccharides selected from the group consisting of sugar, fructose, starch syrup, glucose, rare sugars excluding allulose and oligosaccharides, sugar alcohols, and dextrins. The one or more saccharides to be further mixed are 0.01 to 20% by weight, preferably 0.1 to 10% by weight, or more preferably 0.1 to 5% by weight, based on 100% by weight of the total nutritional drink, or may not be included.

The rare sugars other than allulose may include at least one selected from the group consisting of tagatose, allose, and altose. In addition, the oligosaccharide refers to a low-viscosity saccharide in which monosaccharides such as glucose, fructose, and galactose are dehydrated and condensed to form a glycoside bond, and about 2 to 5 monosaccharides are connected. The oligosaccharide is a product obtained by processing a saccharide solution obtained from a saccharide-based raw material, and includes fructooligosaccharide, isomaltooligosaccharide, galactooligosaccharide, maltooligosaccharide, xylooligosaccharide, and genthiooligosaccharide. The oligosaccharides can be used according to the starting materials, for examples, maltooligosaccharide or isomaltooligosaccharide obtained from starch-based raw material, galactooligosaccharide obtained from lactose, and fructooligosaccharide obtained from sugar.

The sugar alcohols may be at least one selected from the group consisting of xylitol, maltitol, erythritol, mannitol, lactitol, inositol, and sorbitol. The dietary fiber may be a water-soluble dietary fiber, and the water-soluble dietary fiber may be at least one selected from the group consisting of polydextrose, indigestible maltodextrin, and pectin. The oligosaccharide may be at least one selected from the group consisting of fructooligosaccharide, isomaltooligosaccharide, maltooligosaccharide, and galactooligosaccharide.

The nutritional drink of the present invention can include at least one selected from the group consisting of caffeine, taurine, amino acids, carnitine, ribose, inositol, vitamins, minerals, antioxidants, carbohydrates, proteins, fatty acids, electrolytes, plant extracts (ginseng, red ginseng and etc.), creatine, alpha-lipoic acid, lutein, guarana, choline, L-carnitine, coenzyme Q10, omega-3 fatty acids, royal jelly, carotene, flavonoids, cacao, and polyphenols, as a supplementary ingredient for nutritional supplementation or physical fatigue recovery.

For example, Caffeine may be contained in an amount of 0.001 to 1.0, or preferably 0.001 to 0.5% by weight based on 100% by weight of the total solid content of the nutritional drink. Taurine may be contained in an amount of 0.1 to 10% by weight or preferably 0.1 to 5.0 % by weight based on the total weight of the nutritional drink.

The nutritional drink of the present invention may further include one or more selected from the group consisting of high-intensity sweeteners, acidulants, fruit juices, flavors, coloring agents, acidity regulators, and preservatives.

The high-intensity sweeteners include aspartame, acesulfame potassium, sodium cyclamate, sodium saccharin, sucralose, stevia sweetener (steviol glycoside, enzyme-treated stevia), dulcine, taumatin, tomatoatin, neotam, rebaudioside (for example, it may be one or more selected from the group consisting of rebaudioside A, rebaudioside D, and rebaudioside M) and monelin. The high-intensity sweeteners may be included in an amount of 0.0001 to 0.5% by weight, or preferably 0.001 to 0.2% by weight, based on 100% by weight of the total fruit drink. The high-intensity sweeteners, for example, sucralose, may cause an undesirable aftertaste due to lingering sweet aftertaste, and the high-intensity sweeteners such as steviol glycosides, enzyme-treated stevia, or rebaudioside A may cause bitter taste as well as lingering sweet aftertaste, but the drink of the present invention has the effect of masking the long-lasting of sweetness at the aftertaste and bitterness of the high-intensity sweetness sweetener by using allulose.

The kind of the fruit juice is not particularly limited, and for example, may include at least one selected from the group consisting of citrus fruit juice (orange fruit juice, mandarin orange juice, grapefruit juice, lemon juice, lime juice, etc.), apple juice, grape juice, peach juice, tropical fruit juice (pine apple, Guava, banana, mango, acerola, papaya, passion fruit, etc.), other fruit juices (Japanese apricot juice, pear juice, apricot juice, plum juice, berry juice, kiwi fruit juice, etc.), tomato juice, carrot juice, strawberry juice and melon juice, and may be used by mixing two or more kinds of the fruit juice.

The flavors include at least one selected from the group consisting of apple mint flavor, mojito flavor, orange flavor, lime flavor, lemon flavor, mint flavor, apple flavor, grape flavor, raspberry flavor, blueberry flavor, mango flavor, kiwi flavor, and strawberry flavor.

The colorants may include at least one selected from the group consisting of a carotenoid-based, flavonoid-based, pyrrole-based, quinone-based natural pigments, and tar color, but is not limited thereto.

For example, the tar color may include an azo pigment, a xanthic-based pigment, a triphenylmethane-based pigment, an indigoid-based pigment, and the like in terms of chemical structure. For example, the tar color may include FD&C Green No.3, FD&C Green No.3 Aluminum Lake, FD&C Red No.2, FD&C Red No.2 Aluminum Lake, FD&C Red No.3, FD&C Blue No.1, FD&C Blue No.1 Aluminum Lake, FD&C Blue No.2, FD&C Blue No.2 Aluminum Lake, FD&C Yellow No.4, FD&C Yellow No.4 Aluminum Lake, FD&C Yellow No.5, FD&C Yellow No.5 Aluminum Lake, FD&C No. 40, FD&C Red No. 40 Aluminum Lake, FD&C Red No. 102, and Food Tar Color Aluminum Lake.

The acidulant may be a variety of commonly used organic acids, or preferably may be at least one selected from the group consisting of citric acid, malic acid, fumaric acid, acetic acid, lactic acid, ascorbic acid, sodium ascorbate, and tartaric acid.

The acidity regulating agent is a commonly used acidity regulating agent, and may include, for example, one or more selected from the group consisting of trisodium citrate, sodium citrate, sodium ascorbate, and glucono-delta-lactone, but is not limited thereto.

The preservative may be commonly used preservatives, for example, sodium benzoate or sodium sorbate, but is not limited thereto.

The nutritional drink of the present invention may or may not contain carbonic acid, but is preferably a non-carbonated nutritional drink that does not contain carbonic acid.

As another example of the present invention, it provides a method for producing a nutritional drink, comprising the step of mixing allulose, vitamins and rutin.

The description related to the nutritional drinks can be identically applied to the method of manufacturing fruit-vegetable drink.

The manufacturing method may include one or more additional processes selected from the group consisting of filtration, sterilization, decolorization, and cooling processes.

### [Effect of Invention]

The present invention relates to a nutritional drink containing allulose, vitamins, and rutin, and a method for manufacturing the same, which improves storage stability by increasing the color stability of vitamins, and has good sensory property by improving vitamin odor or aftertaste of high-intensity sweetener.

### [Brief Description of Drawings]

FIG 1 is a photograph showing the color of the nutritional drinks of Examples 1 to 5 and Comparative Examples at immediately after manufacturing and after storing for 6 hours and 24 hours in a light-induced deterioration tester.
FIG 2 is a result of measuring the color difference value after preparing the nutritional drinks of Examples 1 to 5 and Comparative Examples after storing for 24 hours in a light-induced deterioration tester.

### [Mode for Invention]

The present invention will be described in more detail with reference to the following exemplary examples, but the scope of protection of the present invention is not intended to be limited to the following examples.

### Preparation Example 1. Preparation of allulose syrup

Allulose was prepared from a fructose substrate by a biological method substantially the same as that described in Korean Patent No. 10-16173797. The allulose syrup containing 24-26 (w/w)% allulose was obtained with glucose: fructose: allulose: oligosaccharide = 6:67:25:2 from a raw material of 95 wt% fructose at 40 brix.

In order to remove impurities such as color and ionic components, the obtained allulose syrup was treated by passing through a column filled with a cation exchange resin, an anion exchange resin, and a mixed resin of cation exchange resin and anion exchange resin at a rate of twice the volume of the ion exchange resin per hour at room temperature. Then, the high-purity allulose fraction was obtained by performing chromatography with column filled with a calcium (Ca2+) type ion exchange resin. The allulose fraction was carried out for the ion purification and the concentration to prepare an allulose syrup containing 95% by weight of allulose and 5% by weight of fructose based on 100% by weight of the solid content of the syrup composition.

The pH, color value, and electrical conductivity of the allulose syrup having an allulose content of 95% by weight were measured and shown in Table 1 below.

**[Table 1]**

| Assortment | Allulose 95% syrup |
|---|---|
| pH | 4.41 |
| Color value (absorbance, 420nm) | 0.039 |
| Electrical conductivity (ms/cm) | 15.13 |

### Examples 1 to 5. Preparation of nutritional drinks

A nutritional drink containing the allulose syrup prepared in Preparation Example 1 was prepared.

Specifically, the allulose syrup was mixed with each component according to the composition and mixing ratio (w/w%) shown in Table 2 below, stirred, filtered with 120 mesh, and sterilized at 98°C for 30 seconds. This was filtered again through 80 mesh and then filled at 88°C. Then, the sterilization was performed for 15 minutes at a temperature of 85°C and cooled to prepare a nutritional drink.

**[Table 2]**

| Component | Comparative Example | Example 1 | Example 2 | Example 3 | Example 4 | Example 5 |
|---|---|---|---|---|---|---|
| Allulose syrup (Samyang corp.) | - | 8.200 | 8.200 | 8.200 | 8.200 | 8.200 |
| Maltitol syrup | 8.200 | - | - | - | - | - |
| Enzymaticall y-modified rutin | - | - | 0.005 | 0.010 | 0.015 | 0.020 |
| vitamin premix | 0.0517 | 0.0517 | 0.0517 | 0.0517 | 0.0517 | 0.0517 |
| taurine and natural caffeine | 0.832 | 0.832 | 0.832 | 0.832 | 0.832 | 0.832 |
| apple juice concentrated (72bx) | 0.020 | 0.020 | 0.020 | 0.020 | 0.020 | 0.020 |
| citric acid | 0.490 | 0.490 | 0.490 | 0.490 | 0.490 | 0.490 |
| sucralose | 0.016 | 0.016 | 0.016 | 0.016 | 0.016 | 0.016 |
| Drink flavor | 0.125 | 0.125 | 0.125 | 0.125 | 0.125 | 0.125 |
| Distilled water | Remaining amount | Remaining amount | Remaining amount | Remaining amount | Remaining amount | Remaining amount |
| Sum | 100.000 | 100.000 | 100.000 | 100.000 | 100.000 | 100.000 |

The vitamin premix containing 0.0025% by weight of vitamin B6 hydrochloride, 0.0026% by weight of vitamin B2 phosphate ester sodium, 0.0025% by weight of vitamin B1 nitrate, 0.0081% by weight of nicotinic acid amide, and 0.0441% by weight of other ingredients based on 100% by weight of the total composition was used.

### Comparative Example

A nutritional drink was prepared in the same manner as in Example 1, except that maltitol syrup was used instead of allulose used in Example 1. The used maltitol syrup contained the maltitol solid content of 5.74% by weight.

### Test Example 1. Calorie analysis of nutritional drinks

Based on the composition of the nutritional drinks according to Examples 1 to 5 and Comparative Examples, calories were calculated by the theoretical value calculation method using nutrients. It was confirmed that calorie of the Comparative Example containing maltitol syrup was 15 Kcal/100 mL, whereas the calories of Examples 1 to 5 containing allulose syrup was only 1Kcal/100mL.

Accordingly, it was confirmed that the nutritional drink of the present invention had a significantly lower calorie that that of the Comparative Example using maltitol syrup.

### Test Example 2. Measurement of Color difference

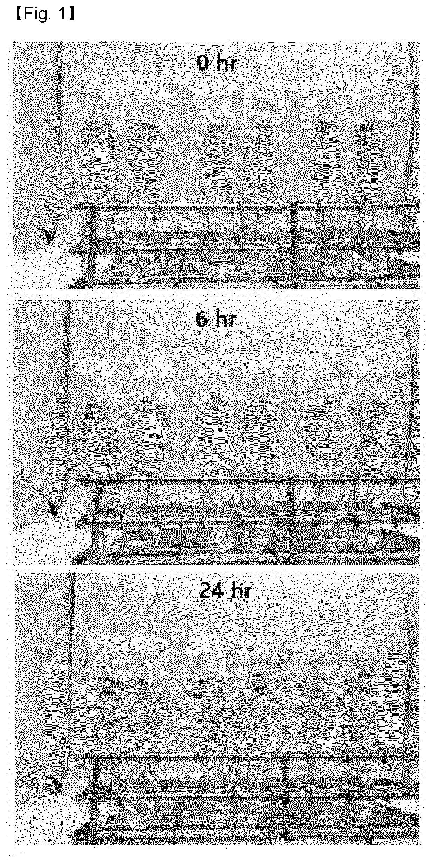

After storing samples of the nutritional drinks according to Examples 1 to 5 and Comparative Example at a temperature of 45°C and 4,000 lux in a light-induced deterioration tester for 0 hours (right after manufacturing), 6 hours, and 24 hours, the chromaticity was measured with the color-difference meter (CM-3500d, Konica Minolta, Osaka, Japan) to calculate ΔE^{∗}ab (FIG. 1).

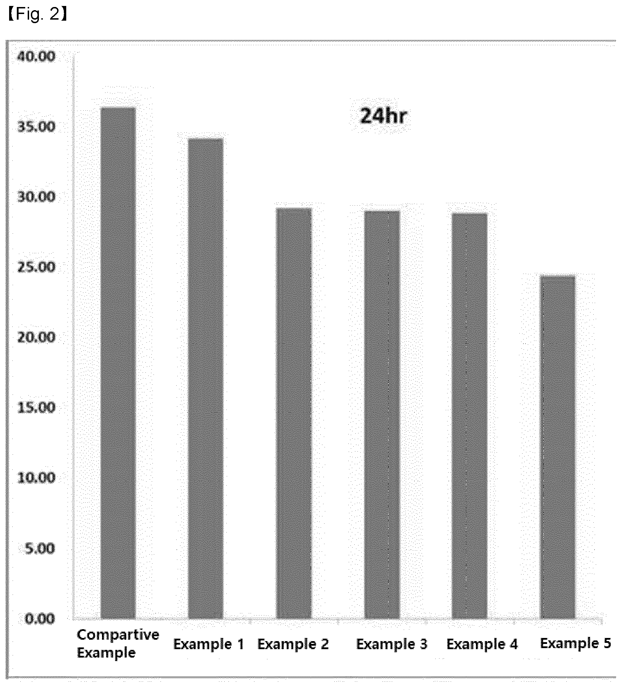

During chromaticity analysis, L value (lightness) representing brightness, a value (redness) representing red color (-) and green color (+), and b value (Yellowness) representing yellow color were measured, and L value of the color standard plate was 95.17, a value was -1.22, and b value was -5.13. Based on the measured chromaticity, the color difference values (ΔE^{∗}ab) are shown in Table 3 and FIG. 2.

**[Table 3]**

| Time | Comparat ive Example | Example 1 | Example 2 | Example 3 | Example 4 | Example 5 |
|---|---|---|---|---|---|---|
| 0hr | 0.00 | 0.00 | 0.00 | 0.00 | 0.00 | 0.00 |
| 6hr | 20.52 | 20.19 | 19.55 | 21.17 | 18.34 | 16.27 |
| 24hr | 36.40 | 34.19 | 29.24 | 29.05 | 28.87 | 24.43 |

As can be seen from the results, it is confirmed that the color of the vitamin is stabilized by using allulose, which means that the deterioration caused by oxidation of the vitamin and the like decreases.

### Test Example 3. Sensory evaluation

Sensory evaluation was performed on the nutritional drinks of Examples 1 to 5 and Comparative Example. The evaluation items of flavor, sweet taste, sour taste, lingering sweet aftertaste, mouthfeel, taste harmony, sweetness satisfaction, and overall satisfaction were evaluated according to the following evaluation criteria and the evaluation results were shown in the table below. A sensory evaluation was performed on 14 male and female panelists in their 20s and 50s using a 5-point scale.

### [Evaluation criteria]

Favor: Very low intensity (0 points)-Very high intensity (5 points)
Sweet taste: No sweetness (0 points)-Very high sweetness (5 points)
Sour taste: No sour taste (0 points)-Very high sour taste (5 points)
Lingering sweet aftertaste: No lingering sweet aftertaste (0 points)-Very long lingering sweet aftertaste (5 points)
Mouthfeel: No mouthfeel (0 points)-Very high mouthfeel (5 points)
Taste harmony: No taste harmony (0 points)-Very good taste harmony (5 points)
Sweetness satisfaction: Very bad overall sweetness satisfaction (0 points)- very good overall sweetness satisfaction (5 points)

**[Table 4]**

| Evaluated Item | Comparat ive Example | Example 1 | Example 2 | Example 3 | Example 4 | Example 5 |
|---|---|---|---|---|---|---|
| Flavor | 3.2 | 3.2 | 3.2 | 3.3 | 3.2 | 3.3 |
| Sweet taste | 3.1 | 3.1 | 3.1 | 3.1 | 3.2 | 3.2 |
| Sour taste | 3.7 | 3.7 | 3.8 | 3.7 | 3.8 | 3.8 |
| Sweetness lingering | 3.1 | 2.8 | 2.8 | 2.7 | 2.8 | 2.8 |
| Mouthfeel | 2.6 | 2.6 | 2.6 | 2.6 | 2.6 | 2.6 |
| Taste harmony | 3.15 | 3.3 | 3.3 | 3.3 | 3.3 | 3.3 |
| sweetness satisfaction | 2.8 | 3.1 | 3.2 | 3.2 | 3.2 | 3.2 |
| Overall satisfaction | 3.4 | 3.5 | 3.6 | 3.6 | 3.5 | 3.5 |

As can be seen from the above results, it is confirmed that the nutritional drink containing allulose not only improves sweetness lingering which is unique to the high-intensity sweetener, but also produced a nutritious drink having more excellent sweetness satisfaction even with low calories.

## Claims

1. A nutritional drink comprising allulose, vitamin and rutin.

2. The nutritional drink of claim 1, wherein the nutritional drink has a color difference value (ΔE^{∗}ab) of 1 to 36, after storing 24 hours at a temperature of 45°C and 4,000 lux in a light-induced deterioration tester.

3. The nutritional drink of claim 1, wherein a calorie of the nutritional drink is 0.1 to 20 kcal/100 mL.

4. The nutritional drink of claim 1, wherein the vitamin is at least one selected from the group consisting of vitamin A, vitamin B1, vitamin B2, vitamin B3, vitamin B5, vitamin B6, vitamin B7, vitamin B9, vitamin B12, vitamin C, and vitamin E.

5. The nutritional drink of claim 1, wherein the rutin is an enzymatically modified rutin.

6. The nutritional drink of claim 1, wherein the nutritional drink further comprises at least one selected from the group consisting of caffeine, taurine, amino acids, carnitine, ribose, inositol, vitamins, minerals, antioxidants, carbohydrates, proteins, fatty acids, electrolytes, plant extracts, creatine, alpha-lipoic acid, lutein, guarana, Choline, L-carnitine, coenzyme Q10, omega-3 fatty acids, carotene, flavonoids, and polyphenols.

7. The nutritional drink of claim 1, wherein the allulose is added by syrup or powder.

8. The nutritional drink of claim 6, wherein the allulose is contained in an amount of 0.1 to 20% by weight based on 100% by weight of the total solid content of the nutritional drink.

9. The nutritional drink of claim 1, wherein the nutritional drink further comprises at least one selected from the group consisting of high-intensity sweeteners, acidulants, fruit juices, flavors, coloring agents and preservatives.

10. The nutritional drink of claim 1, wherein the nutritional drink is non-carbonated.

11. The nutritional drink of claim 1, wherein the vitamin is contained in a solid content of 0.0001 to 0.5% by weight based on 100% by weight of the total nutritional drink.

12. The nutritional drink of claim 1, wherein the rutin is contained in a solid content of 0.0001 to 0.5% by weight based on 100% by weight of the total nutritional drink.
